# NEW EUROPEAN PATENT SPECIFICATION

(11) **EP 0 152 943 B2**
(45) Date of publication and mention of the opposition decision: **27.01.1993**
(45) Mention of the grant of the patent: 16.12.1987
(21) Application number: 85101801.0
(22) Date of filing: 19.02.1985
(51) Int. Cl.: A21D 2/36

(54) **A method for making bread.**
Methode für Herstellung von Brot.
Un procédé pour la fabrication du pain.

(30) Priority: 23.02.1984 DK 960/84
(43) Date of publication of application: 28.08.1985
(73) Proprietor: NEXUS A/S, DK-7130 Juelsminde (DK)
(72) Inventor: Schou, Herbert William Docker, DK-7130 Juelsminde (DK); Dreyer, Jack Allan, DK-8700 Horsens (DK); Zeeberg, John, DK-7130 Juelsminde (DK); Birkebaek, Susanne, DK-7130 Juelsminde (DK)
(74) Representative: Plougmann, Ole

(56) References cited:
- EP-A- 0 124 996
- CA-A- 1 075 968
- DE-B- 2 622 748
- DE-C- 3 131 432
- US-A- 1 189 130
- M.D.Breen et al., Cereal Chem. 54/4, 1977, pp.728-736
- K.Seiler and W. Seibel, Gordian, 78/10, 1978, pp.284-291
- W.Seibel, Gordian 79/11, 1989, pp.297-300
- Y.Andersson et al, Cereal Chem. 58/5, 1981, pp.370-374

## Description

In the preparation of rye bread, it has been customary to add. during the dough preparation, a small amount of precooked rye or maize starch. This addition improves the dough properties in that it facilitates the handling of the dough and controls or regulates the water absorption so that minor excesses or deficiencies in the water addition will not to any major extent influence the consistency of the dough. Also the sliceability of the final loaf or bread is improved by the addition of the precooked starch which confers a higher elasticity to the bread and thereby also gives an impression of "freshness".

The precooked starch may be added as such, but in most industrial preparation of rye bread, the precooked starch is added as a dry powder because it is more easy to dose.

In certain cases, precooked starch is also used in the same manner in the preparation of coarse bread types based on wheat meal.

It has now been found that a combination of a starch and a fibrous material, when treated in a particular manner, exerts the same effect as the precooked starch, but, in addition, confers a number of additional and surprising improvements such as a better gas retention in the fermenting dough, thus reducing the necessary amount of yeast or other microorganism involved in the rising of the bread, a better colouring effect on the dough, thus rendering the addition of other colourants superfluous, a better machinability, and an improved sliceability compared with bread made with precooked starch, together with an improvement of the taste.

Thus, the invention relates to a method of manufacturing rye bread or bread types based on rye or wheat meal combined with other cereal meals or flours, the method comprising adding to the mixture from which the bread dough is made, a finely divided composition prepared by heating and extrusion of a mixture of a cereal flour or meal or starch on the one hand and a vegetable fibrous material on the other hand, handling of the dough and baking of the bread being performed in a normal manner.

Examples of cereal flours or meals or starches which may be used in the mixture from which the composition is made are rye flour, rye meal, wheat flour, wheat meal or wheat starch, maize flour, maize meal or maize starch, It is often preferred to use rye meal when the composition is to be used for preparing rye bread or bread based on rye meal combined with other cereal meals or flours. Examples of vegetable fibrous materials which may be used in the mixture for making the composition are brans such as wheat bran, rye bran, pea bran and soybean bran, and fibers such as sugar beet fibers.

The weight ratio between the flour or meal or starch and the fibrous material is normally in the range of about 30-50% of the flour or meal or starch to about 70-50% of the fibrous material, such as, e.g., about 40% of the flour or meal and about 60% of the bran.

A preferred composition Is a composition made from rye meal and wheat bran, such as, e.g., about 30-50% of rye meal, preferably about40% of rye meal and 70% of wheat bran, such as about 60% of wheat bran.

By being subjected to heating and extrusion in an extruder, the mixture becomes "expanded", that is, is converted into air-filled, hollow granules. The conditions In the extruder with respect to temperature and moisture content of the mixture in the extruder should be so selected that a certain degree of precooking of the starch of the cereal component will take place. Normally, this means that the temperature should be at least 65°C, preferably at least 75°C. The normal natural moisture content of the meal or starch and the fibrous material (about 12-14% by weight) is usually sufficient. If necessary, a small amount of water, such as 2-9%, calculated on the weight of the mixture supplied to the extruder, may be added. Preferably, the temparature during the extrusion process is kept at such an elevated level that a certain degree of "roasting" of the product will take place, typically a temperature of about 140-190°C, such as 150-180°C, as this roasting contributes to the development of the above- mentioned good taste and colouring properties.

The product obtained from the extruder consists of expanded granules of a relatively crisp character. These granules may, In principle, be added as such to the dough and become disintegrated during the mixing of the dough (which is within the scope of the invention), but it is generally preferred to comminute the granules in a mill such as a hammer mill or a disc mill.

Preferably, the resulting powder is included in bread mixes in a similar manner as the powdery precooked starch incorporated in the known art. As mentioned above, the handling of the dough and the baking of the bread is performed in the normal manner. In comparison with similar bread made with precooked starch, the bread made using the above- described compostion has a better taste and a better sliceability. The bread made using the composition also has a more pleasant colour than the colour obtained in the known art where coarse wheat-based, rye-containing bread is coloured by adding roasted malt (which gives a leas pleasant greyish black colour, whereas the product of the invention confers a brownish and preferred colour to the bread).

In addition, bread made with the composition has the advantage, from a dietetic point of view, that it has an added fiber content derived from the bran or fibers used in the preparation of the composition.

While normal bran will develop an unpleasant taste after a relatively short storage period, the composition of the invention does not have this tendency, apparently because the constituents which confer an unpleasant taste to bran are removed or decomposed during the extrusion process. This means that the composition of the invention can be stored for years without deterioration.

The composition is normally added in an amount of 1-12% by weight, calculated on the total dry bread mix constituents, often in an amount of 1-6% by weight, calculated on the same basis.

In rye bread, the composition is often added in an amount of about 2% by weight, calculated on the rye meal or rye flour. In coarse wheat bread, the amount added may be somewhat higher, typically in the range of about 2-6%, typically about 4%, by weight, calculated on the total dry bread mix constituents. Also in coarse wheat breed, the same positive effects as mentioned above are obtained by the use of the composition, i.e. better sliceability, less drying out during storage and a better taste, in addition to the above- mentioned better colour. When used for preparing coarse wheat bread, the composition is often preferably a composition made from wheat meal as the cereal constituent.

### Example 1

To an extruder of the type BC 45 supplied by Creusot-Loire, France, and comprising a double screw which rotates at a rotational speed of 180 r.p.m., and two nozzles of a diameter of 2 mm, part of the double screw length being cooled by means of a water jacket and the part of the double screw being adjacent to the nozzles being heated by means of an induction heating jacket, a mixture of 40% of rye meal and 60% of wheat bran was supplied in an amount of 35 kg/hour. The temperature in the screw section was kept at 180°C. The extrudate consisted of expanded (air-filled, hollow) crisp granules.

The granules were comminuted into a fine powdery product in a disc mill.

Rye bread was baked in the following manner:
1 kg rye meal was admixed with 20 g salt, 300 g sour dough, about 600 g water and 20 g of the comminuted product prepared as described above. The constituents were mixed and the dough was allowed to rise at a temperature of 28-30°C for one hour, whereafter it was put into a baking tin and was allowed to rise for an additional 30 minutes and was then baked for 1 hour in an oven which had been preheated to 230°C and in which the temperature gradually decreased to 180°C during the baking time.

The quality of the resulting rye bread was evaluated by an experienced panel by comparison with rye bread prepared in the same manner, but with 20 g precooked starch instead of the composition made as described above. The rye bread made with the composition was found to have an improved sliceability, a more pleasant colour and an improved taste, compared to the same qualities of the rye bread made using precooked starch.

In a similar manner, a light rye bread type may be made from about 70 parts by weight of rye meal, 30 parts by weight of wheat flour, 2 parts by weight of salt, 15-20 parts by weight of sour dough or 1 part of dough acidifying agent (e.g., a mixture of 4.5 parts by weight of citric acid, 4.5 parts by weight of malic acid, and 1 part by weight of calcium acetate), about 60 parts by weight of water and 2 parts by weight of the comminuted composition prepared as described above.

### Example 2

To an extruder of the same type as described in Example 1, but rotating at a rotational speed of 80 r.p.m. and with 2 nozzles of a diameter of 4 mm, a mixture of 30% by weight of wheat whole meal and 70% of wheat bran was supplied in an amount of 30 kg/hour. The temperature in the screw section of the extruder was kept at 150°C. The extrudate consisted of expanded crisp granules which were comminuted into a fine powdery product in a disc mill.

High fiber bread may be made in the following manner:
50 parts by weight of rye meal is admixed with 30 parts by weight of wheat flour, 6 parts by weight of dietetic fibrous material (soy fibers or soy bran), about 60 parts by weight of water, 1 part by weight of dough acidifying agent, 5 parts by weight of bakers' yeast, and 10 parts by weight of the comminuted product prepared as described above; baking temperature 210-220°C.

### Example 3

To an extruder of the same type as described In Example 1, but rotating at a rotational speed of 180 r.p.m. and with 2 nozzles of a diameter of 4 mm, a mixture of 40% by weight of corn grutting and 60% of wheat bran was supplied in an amount of 30 kg/hour. The temperature In the screw section of the extruder was kept at 150°C. The extrudate consisted of expanded crisp granules which were comminuted into a fine powdery product in a disc mill. This product Is well suited for preparing rye bread in the same manner as described in Example 1.

## Claims

1. A method for manufacturing rye bread or bread types based on rye or wheat meal combined with other cereal meals or flours by adding to the mixture from which the bread dough Is made, a finely divided composition prepared by heating and extrusion of a mixture of a cereal flour or meal or starch on the one hand and a vegetable fibrous material on the other hand, the weight ratio between the flour or meal or starch and the fibrous material in the mixture from which the composition is made being in the range of about 30-50% by weight of the flour or meal or starch to about 70-50% by weight of the fibrous material, and the extruded product being in the form of expanded granules of a relatively crisp character, handling of the dough and baking of the bread being performed in a normal manner.

2. A method according to claim 1 wherein the weight ratio between the flour or metal or starch and the fibrous material in the mixture from which the composition is made is about 40%, by weight of the flour or meal or starch to about 60%, by weight of the fibrous material.

3. A method according to claim 2 wherein the meal of the composition is rye meal and the bran is in particular wheat bran.

4. A method according to any of the preceding claims wherein the composition is included in an amount of 1-12% by weight, in particular 1-6% by weight, calculated on the total dry bread mix constituents.

5. A method according to claim 4 wherein the bread is a rye bread, and the composition is added in an amount of about 2% by weight, calculated on the rye meal.

6. A method according to claim 4 wherein the bread is coarse wheat bread, and the composition is added in an amount in the range of about 2-6%, such as about 4%, calculated on the total dry bread mix constituents.

## Patentansprüche

1. Verfahren zur Herstellung von Roggenbrot oder Brotarten auf der Grundlage von Roggen- oder Weizenmehl bzw. -grobmehl (meal), kombiniert mit anderen Getreidegrobmehlen oder -feinmehlen (flour), welches das Einschliessen einer feinzerteilten Zuzammensetzung, hergestellt durch Erwärmung und Extrusion einer Mischung eines Getreidefeinmehls oder -grobmehls oder Stärke einerseits und eines pflanzlichen, faserigen Materials andererseits, in die Mischung, aus der der Brotteig hergestillt wird, umfasst, wobei das Gewichtsverhältnis zwischen dem Feinmehl oder Grobmehl oder der Stärke und dem faserigen Material in der Mischung, aus der die Zusammensetzung hergestellt wird, im Bereich von etwa 30 bis 50 Gew.-% des Feinmehls oder Grobmehls oder der Stärke zu etwa 70 bis 50 Gew.-% des faserigen Materials liegt, und das extrudierte Produkt in der Form von expandierten Körnchen eines relativ harten Characters ist, wobei die Handhabung des Teigs und das Backen des Brotes in einer normalen Weise ausgeführt wird.

2. Verfahren nach Anspruch 1, worin das Gewichtsverhältnis zwischen dem Feinmehl oder Grobmehl oder der Stärke und dem faserigen Material in der Mischung, aus der die Zusammensetzung hergestellt wird, etwa 40 Gew.-% des Feinmehls oder Grobmehls oder der Stärke zu etwa 60 Gew.-% des faserigen Materials liegt.

3. Verfahren nach Anspruch 2, worin das Grobmehl in der Zusammensetzung Roggengrobmehl und die Kleie insbesondere Weizenkleie ist.

4. Verfahren nach einem der vorhergehenden Ansprüche, worin die Zusammensetzung in einer Menge von 1 bis 12 Gew.-%, insbesondere 1 bis 6 Gew.-%, bezogen auf die Gesamtbestandteile der Trockenbrotmischung, eingeschlossen ist.

5. Verfahren nach Anspruch 4, worin das Brot ein Roggenbrot ist und die Zusammensetzung in einer Menge von etwa 2 Gew.-%, bezogen auf das Roggengrobmehl, zugegeben wird.

6. Verfahren nach Anspruch 4, worin das Brot grobes Weizenbrot ist und die Zusammensetzung in einer Menge im Bereich von etwa 2 bis 6%, wie etwa 4%, bezogen auf die Gesamtbestandteile der Trockenbrotmischung, zugegeben wird.

## Revendications

1. Procédé de fabrication de pain de seigle ou de types de pains à base de farine de seigle ou de blé en combinaison avec d'autres farines ou fécules de céréales, consistant à incorporer dans le mélange avec lequel on prépare la pâte de pain, une composition finement divisée préparée par chauffage et extrusion d'un mélange de fécule ou de farine, ou d'amidon, de céréales, d'une part et d'une matière fibreuse végétale, d'autre part, le rapport pondéral de la farine ou fécule ou d'amidon à la matière fibreuse dans le mélange avec lequel la composition est préparée étant compris entre 30 à 50% environ en poids de farine ou fécule ou d'amidon pour environ 70 à 50% en poids de matière fibreuse et le produit extrudé étant en forme des granules expansées relativement crou stillantes, la manipulation de la pâte et la panification du pain étant effectuées dans une manière normale.

2. Procédé selon la revendication 1, dans lequel le rapport pondéral de la farine ou fécule ou d'amidon à la matière fibreuse dans le mélange avec lequel la composition est préparée est compris 40% environ en poids de farine ou fécule ou d'amidon pour environ 60% en poids de matière fibreuse.

3. Procédé selon la revendication 2, dans lequel la farine de la composition est une farine de seigle et le son est en particulier le son de blé.

4. Procédé selon l'une quelconque des revendications précédentes dans lequel on incorpore la composition à raison de 1 à 12% en poids, en particulier 1 à 6% en poids, qu'on calcule par rapport aux constituants secs totaux de mélange de pain.

5. Procédé selon la revendication 4, dans lequel le pain est un pain de seigle et on ajoute la composition en une quantité d'environ 2% en poids, calculée par rapport à la farine de seigle.

6. Procédé selon la revendication 4, dans lequel le pain est un pain de blé grossier et on ajoute la composition en une proportion comprise entre environ 2 et 6%, telle qu'environ 4%, calculée par rapport aux constituants secs totaux de mélange de pain.
